# EUROPEAN PATENT APPLICATION

(11) **EP 1 355 054 A2**
(43) Date of publication of application: **22.10.2003**
(21) Application number: 03252385.4
(22) Date of filing: 15.04.2003
(51) Int. Cl.: F02C 9/28, F02C 9/46, F02D 9/00

(54) **Fuel Control System for a gas turbine engine having overthrust control**

(30) Priority: 16.04.2002 GB 0208645
(71) Applicant: Goodrich Control Systems Limited, Luton, Bedfordshire LU1 3LU (GB)
(72) Inventor: Elliot, Philip Laurence, Stirchley, Birmingham B30 2SX (GB)
(74) Representative: Carpenter, David

(57) **Abstract**

A fuel control system for a gas turbine engine including a main metering valve (15) for controlling fuel flow to a line (18) which in use supplies fuel to a burner manifold (19) of a gas turbine engine, said line including an overthrust valve (21) downstream of the main metering valve, said overthrust valve being movable, by the application thereto of pressurised fluid, from an open position towards a closed position to reduce the flow of fuel from the main metering valve (15) to the burner manifold (19) in use, the system having a pair of parallel paths (31, 32) through which in use said pressurised fluid is supplied to the overthrust valve (21), the first (31) of said paths being closed so as to become ineffective when the overthrust valve reaches a predetermined point in its movement towards closure, and the second (32) of said paths including a flow restrictor (33) controlling the rate at which the overthrust valve is moved from said predetermined point towards its closed position.

## Description

### Technical Field

This invention relates to a fuel control system for a gas turbine engine having overthrust control.

### Background Art

It is known to provide a gas turbine fuel control system with overthrust protection. In the event that it is detected that the gas turbine engine is generating thrust in excess of that commanded by the control system (an "overthrust" or as it is also known "overspeed" situation) an overthrust valve is closed to reduce the fuel flow from the main throttle valve of the fuel control system to the burner manifold. See for example our European Patent 0181099 the content of which is incorporated herein by this reference.

It has been recognised that a sudden reduction in the fuel flow to a gas turbine engine can result in a "flame-out" failure of the engine with consequential total loss of thrust from that engine. Clearly if an overthrust situation followed by "flame-out" occurs during a critical phase in the flight program of the aircraft, for example during take-off or landing, an overthrust condition immediately followed by a total loss of thrust could present serious safety concerns. It is an object of the present invention to provide a fuel control system for a gas turbine engine incorporating overthrust protection and wherein the risk of a sudden reduction in fuel flow of the kind which could result in engine "flame-out" is minimised.

### Disclosure of Invention

In accordance with the present invention there is provided a fuel control system for a gas turbine engine including a main metering valve for controlling fuel flow to a line which in use supplies fuel to a burner manifold of a gas turbine engine, said line including an overthrust valve downstream of the main metering valve, said overthrust valve being movable from an open position towards a closed position in which it reduces, or cuts-off, the flow of fuel from the main metering valve to the burner manifold in use, by pressurised fluid supplied to the overthrust valve through a pair of parallel paths, the first of said paths being closed so as to become ineffective when the overthrust valve reaches a predetermined point in its movement towards closure, and the second of said paths including a flow restrictor controlling the rate at which the overthrust valve is moved from said predetermined point towards its closed position.

Preferably the overthrust valve is such that in its closed position a bleed path remains open to supply fuel to the burner manifold.

Desirably a metering valve bypass line can supply fuel to said line downstream said metering valve in a closed condition of said metering valve.

### Brief Description of the Drawings

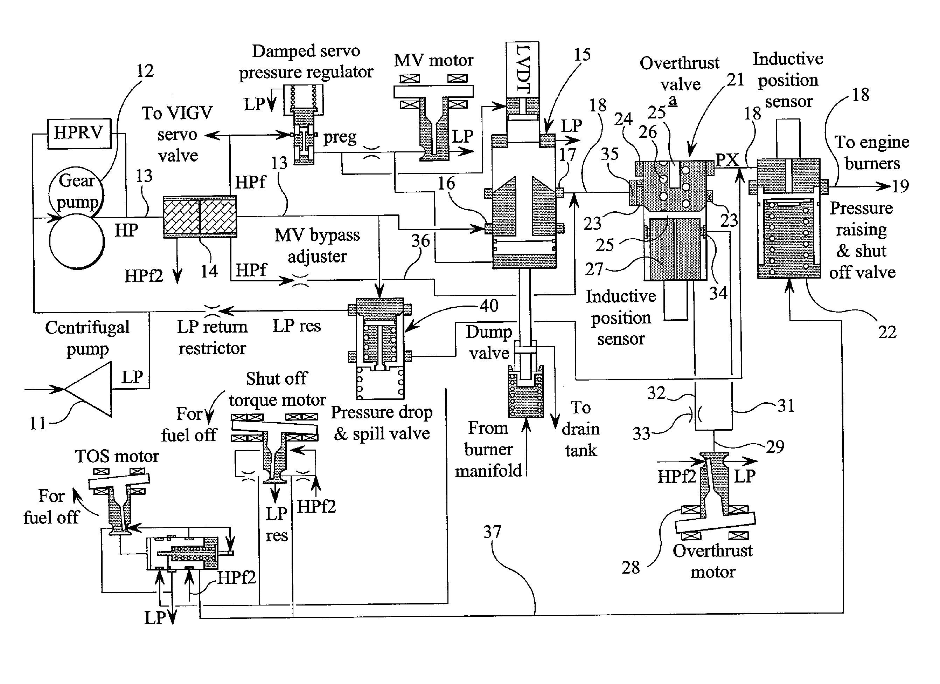

The accompanying drawing is a diagrammatic representation of part of the fuel control system for a gas turbine engine in accordance with one example of the present invention.

### Preferred Mode for carrying out the Invention

Referring to the drawing, fuel is drawn from a fuel reservoir or fuel tank by a low pressure pump 11 and is supplied at low pressure to the inlet of a gear pump 12 the high pressure outlet line 13 of which is connected through a filter 14 to an inlet gallery 16 of a main metering valve 15. The outlet gallery 17 of the metering valve 15 discharges fuel into a line 18 to a burner manifold 19 of a gas turbine engine through an overthrust valve 21 and a pressure raising valve 22 in series. A pressure drop and spill valve 40 is connected between the high pressure outlet line 13 from the gear pump 12, downstream of the filter 14, and the low pressure supply line to the inlet of the pump 12, so as to be able to recirculate fuel from the line 13 back to the low pressure supply. The valve 40 receives a pressure control signal from the line 18 between the valves 21 and 22 and operates to maintain a fixed pressure drop from gallery 16 to line 18 so that the flow through valves 15 and 21 is a function of the area of their open ports.

In normal operation the overthrust valve 21 and pressure raising valve 22 are open, the pressure raising valve 22 in known manner maintaining the pressure upstream of the valve sufficiently high to operate the fuel control system satisfactorily. The quantity of fuel supplied, during normal conditions, to the manifold 19 of the burners of the gas turbine engine is controlled by operation of the main metering valve 15. The valve 15 incorporates a linear variable displacement transducer (LVDT) which monitors the actual position of the control spool of the metering valve 15 and supplies a signal to the electronic control arrangement of the fuel control system representative of the spool position. In known manner a servo-control arrangement associated with the valve 15 controls the position of the spool of the valve 15 to ensure that the actual position of the spool of the valve 15, and therefore the actual fuel flow to the gas turbine engine matches the fuel flow demanded by the electronic control arrangement.

It will be recognised that there can be fault conditions in which the metering valve 15 permits a fuel flow in the line 18 which exceeds that demanded by the electronic control arrangement. For example, there could be a mechanical fault or failure mode in which debris is not collected by the filter 14 and can pass into the valve 15 jamming or otherwise impeding movement of the spool of the metering valve 15 causing the spool to remain in an open position supplying more fuel than is desired to the engine. In such a situation the engine can operate in an overthrust or overspeed mode which may prove dangerous in terms of aircraft control, and which additionally could entail a risk of engine damage.

The line 18 from the main metering valve 15 is connected to an inlet gallery 23 of the valve 21 and an outlet gallery 24 of the valve 21 supplies fuel from the valve 21 through the valve 22 to the burner manifold. The gallery 24 is spaced axially of the valve 21 from the gallery 23 and internally the valve includes a closure member 25 urged to an open position by a compression spring 26 within the valve. The gallery 23, in an open position of the closure member 25, communicates with the gallery 24 through the valve. The closure member 25 can be driven against the action of the spring 26 to meter, and ultimately to cut-off, the flow of fuel through the gallery 23 into the valve, by fluid (usually fuel) under pressure applied to a control chamber 27 of the valve 21.

A servo-control valve 28 controls the fuel pressure in the control chamber 27. When in the position illustrated in the drawing the control valve 28 vents the chamber 27 to low pressure and so the closure member 25 of the valve is fully-open. The valve 28 is bi-stable and when switched to its opposite position closes the low pressure drain line and opens a high pressure supply line. The valve 28 is connected to the chamber 27 of the valve 21 through a line 29 which divides into two parallel lines 31, 32. The line 32 communicates directly with the chamber 27 and contains a flow restrictor 33. The line 31 terminates at a port in the wall of the body of the valve 21, the port, in the fully open position of the closure member 25 of the valve 21, communicating with the chamber 27 through a transverse passage 34 in the wall of the closure member 25.

Fuel under high pressure supplied from the valve 28 to the line 29 flows through the line 32 as controlled by the restrictor 33 and simultaneously through the line 31 and the passage 34 into the chamber 27. It will be appreciated that the flow along the line 31 is, in the open position of the closure member 25, unrestricted, and thus the closure member 25 will be moved rapidly towards its closed position. However, the axial extent of the transverse passage 34 in the closure member 25 is relatively small, and thus after the closure member 25 has moved rapidly, part way towards its closed position, the passage 34 will have been displaced axially beyond the port in the wall of the body of the valve 21 and communication between the port and the passage 34 will be broken, and further supply of fuel under pressure to the chamber 27 will be solely by way of the line 32 at a rate controlled by the restrictor 33.

In use in the event that an overspeed condition of the gas turbine engine is detected, for example as a result of a command being given to reduce engine speed, which command cannot be implemented by the main metering valve as a result of some failure or error in relation to the main metering valve, then the control valve 28 is operated to move from the rest position shown in the drawing where the control chamber 27 is drained to the low pressure side of the system, to an opposite position wherein the low pressure drain is closed and high pressure fuel is applied to the line 29. By virtue of the connection of the line 31 to the chamber 27 initial movement of the closure member 25 of the valve 21 is rapid. During closure movement the closure member 25 interacts with the gallery 23 to perform a metering function reducing the amount of fuel flowing through the valve 21 to the line 18 and the engine manifold. However, the reduction in fuel supply to the engine, while being adequate to produce a reduction in engine speed, is not such that there is a risk of the engine undergoing "flame-out". Moreover, immediately the passage 34 of the closure member 25 has disconnected from the port in the wall of the housing of the valve 21 the continued supply of fuel under pressure to the control chamber 27 of the valve 21 is by way of the line 32 and the flow restrictor 33. Thus thereafter the closure member 25 continues to move towards its closed position but at a controlled rate such that the reduction in fuel flow to the engine is progressive rather than instantaneous, allowing the engine to accommodate the reduction in fuelling without risking "flame-out".

It can be seen in the drawing that the line 18 from the metering valve 15 to the valve 21 supplies not only the gallery 23 but a further port 35 in the wall of the body of the valve 21 axially spaced beyond the gallery 23 in the valve closure direction. The position of the port 35 is such that when the closure member 25 of the valve 21 is in its fully closed position, that's to say hard against an internal stop 25a, then the gallery 23 is completely closed by the closure member 25, but there is still a small flow of fuel through the valve 21 by way of the port 35 and the gallery 24, sufficient to maintain engine operation in a minimum thrust mode. During closure of the valve 21 the pressure drop acting in the closing direction will be directly related to the value set by the pressure drop and spill valve 40. Thus the rate at which the valve 21 closes will be independent of engine operating condition and speed.

Although not directly relevant to the operation of the valve 21 it will be noted that in the fully closed position of the metering valve 15 a metering valve bypass line 36 supplies fuel at a low flow rate to the line 18 intermediate the valve 15 and the valve 21. Should it prove necessary to completely cease operation of the engine then high pressure fuel is supplied through a line 37 to the control chamber of the pressure raising valve 22 to force the pressure raising valve 22 to its fully closed position thereby preventing any fuel flow reaching the burner manifold of the engine.

## Claims

1. A fuel control system for a gas turbine engine including a main metering valve (15) for controlling fuel flow to a line (18) which in use supplies fuel to a burner manifold (19) of a gas turbine engine, said line including an overthrust valve (21) downstream of the main metering valve, said overthrust valve being movable, by the application thereto of pressurised fluid, from an open position towards a closed position to reduce the flow of fuel from the main metering valve (15) to the burner manifold (19) in use, the system being **characterised by** a pair of parallel paths (31, 32) through which in use said pressurised fluid is supplied to the overthrust valve (21), the first (31) of said paths being closed so as to become ineffective when the overthrust valve reaches a predetermined point in its movement towards closure, and the second (32) of said paths including a flow restrictor (33) controlling the rate at which the overthrust valve is moved from said predetermined point towards its closed position.

2. A fuel control system for a gas turbine engine as claimed in claim 1 **characterised in that** the overthrust valve (21) is such that in its closed position a bleed path (35) remains open to supply fuel to the burner manifold.

3. A fuel control system for a gas turbine engine as claimed in claim 1 or claim 2 **characterised by** a metering valve bypass line (36) to supply fuel to said line (18) downstream said metering valve (21) in a closed condition of said metering valve (15).
